# EUROPÄISCHE PATENTSCHRIFT

(11) **EP 3 408 446 B1**
(45) Veröffentlichungstag und Bekanntmachung des Hinweises auf die Patenterteilung: **03.08.2022**
(21) Anmeldenummer: 17711060.8
(22) Anmeldetag: 24.01.2017
(51) Int. Cl.: D21F 11/14, D21F 5/18, D21F 5/00, B21D 53/14, B65H 20/02, B65H 20/06, F16G 3/10

(54) **VORRICHTUNG ZUR HERSTELLUNG VON TISSUE-PAPIER**
METHOD FOR PRODUCING TISSUE PAPER
DISPOSITIF DE PRODUCTION DE PAPIER OUATÉ

(30) Priorität: 25.01.2016 AT 500352016
(43) Veröffentlichungstag der Anmeldung: 05.12.2018
(73) Patentinhaber: Berndorf Band GmbH, 2560 Berndorf (AT)
(72) Erfinder: MORGENBESSER, Karl, 2870 Aspang (AT)
(74) Vertreter: Burger, Hannes
(86) Internationale Anmeldenummer: PCT/AT2017/060009
(87) Internationale Veröffentlichungsnummer: WO 2017/127857

(56) Entgegenhaltungen:
- WO-A1-2015/027263
- DE-A1-102009 001 620
- GB-A- 1 206 169
- US-B2- 8 486 229

## Beschreibung

Die Erfindung betrifft eine Vorrichtung zur Herstellung von Tissue-Papier, welche zumindest ein Endlosband zur Abstützung und zum Transport einer Faserbahn aufweist, wobei die Vorrichtung zumindest eine Druckrolle aufweist, wobei zwischen der zumindest einen Druckrolle und dem zumindest einen Endlosband ein Spalt zum Pressen der Faserbahn gebildet ist.

Tissue-Papier wird aufgrund seiner Saugfähigkeit häufig für Hygieneartikel aus Papier, wie Toilettenpapier, Papiertaschentücher, Papierservietten, Putztüchern aus Papier etc. verwendet.

Aus der GB 1206269 A ist ein Endlosband mit einer schraubenförmig umlaufenden Schweißnaht, aus der DE 102009001620 A1 eine Walze mit einem Belag aus einem schraubenförmig aufgewickelten Metallband und aus der WO2015/027263 A1 ein Endlosband mit mehreren zusammengeschweißten Teilbändern bekannt geworden. Eine Vorrichtung der eingangs genannten Art ist aus der US8486229B2 bekannt geworden. Bei der bekannten Ausführungsform wird anstelle eines großen, auch Yankee-Rolle genannten Krepp-Zylinders, auf welchem die Faserbahn getrocknet, gepresst und gegebenenfalls auch gekreppt wird ein Endlosband aus Metall verwendet. Nachteilig an dem Stand der Technik ist, dass es bei Verwendung eines Endlosbandes, welches mittels einer Querschweißnaht endlos gemacht worden ist, sich die Querschweißnaht in dem Produkt abbilden kann. Darüber hinaus kann es aufgrund der hohen mechanischen Belastungen des Endlosbandes, wie sie bei der Herstellung von Tissue-Papier auftreten, zu einer Beschädigung des Endlosbandes, beispielsweise durch Einrisse im Bereich der Querschweißnaht, kommen, was einen Tausch des Endlosbandes erforderlich machen und Unterbrechungen des Produktionsprozesses zur Folge haben kann.

Es ist daher eine Aufgabe der vorliegenden Erfindung, die Nachteile des Standes der Technik zu überwinden sowie die Produktqualität zu steigern und Produktionsausfälle zu verhindern. Diese Aufgabe wird mit einer Vorrichtung der eingangs genannten Art erfindungsgemäß dadurch gelöst, dass das Endlosband aus zumindest einem Teilband aus Metall, insbesondere Stahl, aufgebaut ist, das schmäler ist als das Endlosband ist, wobei das zumindest eine Teilband mittels einer schraubenförmig umlaufenden Schweißnaht zu dem Endlosband verbunden ist.

Die erfindungsgemäße Lösung zeichnet sich bauartbedingt auch durch eine sehr hohe Lebensdauer des verwendeten Bandes aus. Ein weiterer Vorteil der erfindungsgemäßen Lösung besteht darin, dass sich durch den schraubenförmigen Verlauf der Schweißnaht die auf bandberührende Maschinenteile wirkenden thermischen und mechanischen Belastungen, welche von dem Band übertragen werden, gleichmäßiger verteilen, wodurch Spitzenbelastungen und Überbeanspruchungen vermieden werden können.

Gemäß einer vorteilhaften Weiterbildung der Erfindung, kann es vorgesehen sein, dass die schraubenförmige Schweißnaht die einzige Schweißnaht des Endlosbandes ist. Bei dieser Variante der Erfindung weist das Endlosband in Längsrichtung des Endlosbandes betrachtet keine quer zu der schraubenförmigen Schweißnaht verlaufende Querschweißnaht auf. Durch das gänzliche Fehlen von Querschweißnähten wird die Belastbarkeit des Endlosbandes weiter erhöht.

Um die Gesamtlänge der Schweißnaht gering zu halten, kann es vorgesehen sein, dass die Schweißnaht in einer Längsrichtung des Endlosbandes geneigt ist.

Hinsichtlich einer mechanischen Belastbarkeit in einer Längsrichtung des Endlosbandes hat es sich als vorteilhaft herausgestellt, dass die Schweißnaht in der Längsrichtung des Bandes einen Winkel von 1° bis 25°, insbesondere von 6° bis 9°, einschließt.

Die mechanischen Eigenschaften des Endlosbandes lassen sich dadurch weiter verbessern, dass das Endlosband aus einem einzigen Teilband hergestellt ist, wobei das Teilband einen aus einem einzigen, fügestellenfreien Stück Metallblech gebildeten Bandkörper aufweist. Unter der Formulierung fügestellenfrei wird hier verstanden, dass das Metallblech nicht durch Verschweißen mehrerer kleinerer Teilstücke hergestellt ist. Der Bandkörper des Teilbandes weist somit vor der Herstellung des Endlosbandes keine Schweißnähte auf.

Gemäß einer vorteilhaften Ausführungsform der Erfindung kann es vorgesehen sein, dass das Teilband eine Dicke von 0,3 mm bis 3,5 mm, insbesondere von 0,8 mm bis 1,2 mm, sowie zumindest eine Breite zwischen 300 mm und 1.000 mm aufweist, wobei das Endlosband eine Breite zwischen 700 mm und 5.000 mm aufweist.

Um eine möglichst exakte Anordnung des Endlosbandes in der Vorrichtung zu gewährleisten kann es vorgesehen sein, dass an Außenkanten des Endlosbandes anschließende Bereiche des Teilbandes abgeschnitten sind, wobei einander gegenüberliegende Außenkanten des Endlosbandes in parallel zueinander verlaufenden Ebenen liegen.

Die mechanischen Eigenschaften des Endlosbandes lassen sich dadurch weiter verbessern, dass das zumindest eine Teilband aus Duplexstahl gebildet ist.

Eine Ausführungsform der Erfindung, welche sich durch hohe Korrosionsbeständigkeit und Festigkeit auszeichnet, besteht darin, dass der Duplexstahl ein zweiphasiges Gefüge mit einem Verhältnis von Ferrit zu Austenit zwischen 0,8 bis 1,2 insbesondere von 1 aufweist. So kann der Duplexstahl beispielsweise ein zweiphasiges Gefüge mit 50% Ferrit und 50% Austenit aufweisen.

Die oben genannten Eigenschaften des Endlosbandes können dadurch noch weiter verbessert werden, dass der Duplexstahl zwischen 23 und 26% Chrom und zwischen 5 und 9% Nickel aufweist.

Zum besseren Verständnis der Erfindung wird diese anhand der nachfolgenden Figuren näher erläutert.

Es zeigen jeweils in stark vereinfachter, schematischer Darstellung:
- Fig. 1: eine erfindungsgemäße Vorrichtung
- Fig. 2: ein Endlosband der Vorrichtung aus Fig. 1.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

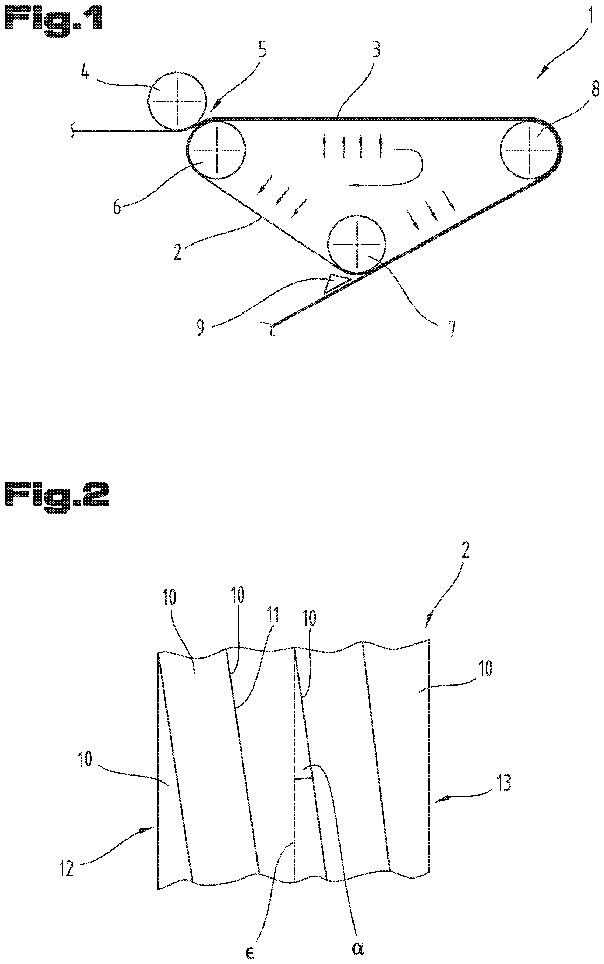

Gemäß Fig. 1 weist eine Vorrichtung 1 zur Herstellung von Tissue-Papier ein Endlosband 2 zur Abstützung und zum Transport einer Faserbahn 3 auf. Weiters umfasst die Vorrichtung 1 eine Druckrolle 4. Zwischen der Druckrolle 4 und dem Endlosband 2 ist ein Spalt 5 zum Pressen der Faserbahn 3 gebildet. Das Endlosband 2 wird von mehreren Rollen 6, 7, 8 gestützt, von welchen beispielsweise eine angetrieben sein kann, um das Endlosband 2 anzutreiben. Eine Umlaufrichtung des Endlosbandes 2 ist in Fig. 1 durch einen Pfeil angedeutet. Auch wenn in Figur 1 drei Rollen 6, 7, 8 dargestellt sind, so kann die Anzahl der Rollen, um welche das Endlosband 2 umläuft je nach Ausführungsform zwischen zwei und beliebig vielen Rollen variieren.

Die Faserbahn 3 wird in den Spalt 5 transportiert, in welchem es von der Druckwalze 4 und dem Endlosband 2 gepresst wird. Ein Transport der Faserbahn 3 zu dem Spalt 5 kann mittels eines Fördermittels, beispielsweise einer hier nicht dargestellten Matte aus Draht, einem textilen Material etc. in an sich bekannter Weise erfolgen. Vor dem Spalt 5 kann die Faserbahn 3 von dem Fördermittel ebenfalls in an sich bekannter Weise gelöst werden. Mittels des Endlosbandes 2 wird die Faserbahn 3 aus dem Spalt 5 in Umlaufrichtung des Endlosbandes 2 weitertransportiert. Das Endlosband 2 und die darauf befindliche Faserbahn 3 können mittels hier nicht explizit dargestellter Heizelemente, beispielsweise mittels Heißluftgebläsen, beheizt werden, um die Faserbahn 3 zu trocknen. Auch können die Rollen 6, 7, 8 beheizt sein. Nach dem Trocknen der Faserbahn 3 kann diese mittels einer Abziehvorrichtung 9 von dem Endlosband 2 abgezogen werden. Mittels der Abziehvorrichtung 9, beispielsweise eines Schabers, insbesondere eines Kreppschabers, oder einer Rolle, kann die Faserbahn 3 auch gekreppt werden.

Wie aus Fig. 2 erkennbar ist, ist das Endlosband 2 aus einem Teilband 10 aus Metall, insbesondere Stahl, aufgebaut. Das Teilband 10, welches schmäler ist als das Endlosband 2, ist mittels einer schraubenförmig umlaufenden Schweißnaht 11 zu dem Endlosband 2 verbunden. An den Außenkanten 12, 13 des Endlosbandes 2 anschließende Bereiche des Teilbandes 10 sind abgeschnitten, sodass einander gegenüberliegende Außenkanten 12, 13 des Endlosbandes 2 parallel zueinander verlaufen.

Das Teilband 10 kann beispielsweise eine Dicke von 0,3 mm bis 3,5 mm, insbesondere von 0,8 mm bis 1,2 mm, sowie zumindest eine Breite zwischen 300 mm und 1.000 mm aufweisen. Das hergestellte Endlosband 2 selbst kann beispielsweise eine Breite zwischen 700 mm und 5.000 mm aufweisen. Die Umfangslänge des Endlosbandes 2 kann ebenfalls variieren und beispielsweise zwischen 3 und 50 m betragen. Je nach Länge und Größe der Vorrichtung 1.

Zur Erzielung der gewünschten Länge und Breite des Endlosbandes wird das Teilband entsprechend schraubenförmig nebeneinander gelegt, sodass aneinander anliegende Abschnitte der Längskante entlang einer Schraubenlinie verlaufen. Hierauf werden die aneinander anliegenden Abschnitte die Längskante miteinander verschweißt. Als Schweißverfahren können grundsätzlich alle geeigneten bekannten Schweißverfahren zum Einsatz kommen, beispielsweise Laserschweißen, WIG-Schweißen, MIG-/ MAG-Schweißen, etc.

Bevorzugt ist das Teilband 10 aus Duplexstahl gebildet, wenngleich auch andere Stähle zur Herstellung des Teilbandes 10 verwendet werden können.

Kommt ein Duplexstahl zum Einsatz so ist es besonders vorteilhaft, wenn der Duplexstahl ein zweiphasiges Gefüge mit einem Verhältnis von Ferrit zu Austenit zwischen 0,8 bis 1,2 insbesondere von 1 aufweist. Zudem kann der Duplexstahl zwischen 23 und 26% Chrom und zwischen 5 und 9% Nickel aufweisen.

Auch wenn es grundsätzlich möglich ist, das Endlosband 2 aus mehreren Teilbändern 10 herzustellen und diese miteinander zu verschrauben, so ist es hinsichtlich der mechanischen Eigenschaften des Endlosbandes 2 jedoch von Vorteil, wenn das Endlosband 2 aus einem einzigen Teilband 10 hergestellt ist und die schraubenförmige Schweißnaht 11 die einzige Schweißnaht des Endlosbandes 2 ist. Zudem kann das Teilband 10 einen aus einem einzigen, fügestellenfreien Stück Metallblech gebildeten Bandkörper aufweisen.

Die Schweißnaht 10 ist in Längsrichtung des Endlosbandes 2 geneigt und schließt mit einer Längsmittelebene ε des Endlosbandes einen Winkel α ein. Der Winkel α liegt hierbei in einem Bereich von 1° bis 25°, insbesondere von 6° bis 9°. Zur Verbesserung ihrer mechanischen Eigenschaften kann die Schweißnaht nachbearbeitet sein, beispielsweise durch Schleifen, Bestrahlen mit Partikel, insbesondere Kugelstrahlen, etc.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Vorrichtung
- 2: Endlosband
- 3: Faserbahn
- 4: Druckrolle
- 5: Spalt
- 6: Rolle
- 7: Rolle
- 8: Rolle
- 9: Abziehvorrichtung
- 10: Teilbahn
- 11: Schweißnaht
- 12: Außenkante
- 13: Außenkante
- ε: Längsmittelebene

## Patentansprüche

1. Vorrichtung (1) zur Herstellung von Tissue-Papier, welche zumindest ein Endlosband (2) zur Abstützung und zum Transport einer Faserbahn (3) aufweist, wobei die Vorrichtung (1) zumindest eine Druckrolle (4) aufweist, wobei zwischen der zumindest einen Druckrolle (4) und dem zumindest einen Endlosband (2) ein Spalt (5) zum Pressen der Faserbahn (3) gebildet ist, **dadurch gekennzeichnet, dass** das Endlosband (2) aus zumindest einem Teilband (10) aus Metall, insbesondere Stahl, aufgebaut ist, das schmäler ist als das Endlosband (2) ist, wobei das zumindest eine Teilband (10) mittels einer schraubenförmig umlaufenden Schweißnaht (11) zu dem Endlosband (2) verbunden ist.

2. Vorrichtung nach einem der Anspruch 1 **dadurch gekennzeichnet, dass** die schraubenförmige Schweißnaht (11) die einzige Schweißnaht des Endlosbandes (2) ist.

3. Vorrichtung nach Anspruch loder 2, **dadurch gekennzeichnet, dass** die Schweißnaht (11) in einer Längsrichtung des Endlosbandes (2) geneigt ist.

4. Vorrichtung nach Anspruch 3, **dadurch gekennzeichnet, dass** die Schweißnaht (11) in der Längsrichtung des Endlosbandes (2) mit einer Längsmittelebene (ε) des Endlosbandes (2) einen Winkel (α) von 1° bis 25°, insbesondere von 6° bis 9°, einschließt.

5. Vorrichtung nach einem der Ansprüche 1 bis 4, **dadurch gekennzeichnet, dass** das Endlosband (2) aus einem einzigen Teilband (10) hergestellt ist, wobei das Teilband (10) einen aus einem einzigen, fügestellenfreien Stück Metallblech gebildeten Bandkörper aufweist.

6. Vorrichtung nach einem der Ansprüche 1 bis 5, **dadurch gekennzeichnet, dass** das Teilband (10) eine Dicke von 0,3 mm bis 3,5 mm, insbesondere von 0,8 mm bis 1,2 mm, sowie zumindest eine Breite zwischen 300 mm und 1.000 mm aufweist, wobei das Endlosband eine Breite zwischen 700 mm und 5.000 mm aufweist.

7. Vorrichtung nach einem der Ansprüche 1 bis 7, **dadurch gekennzeichnet, dass** an Außenkanten (12, 13) des Endlosbandes (2) anschließende Bereiche des Teilbandes (10) abgeschnitten sind, wobei einander gegenüberliegende Außenkanten (12, 13) des Endlosbandes (2) parallel zueinander verlaufen.

8. Vorrichtung nach Anspruch 1 bis 7, **dadurch gekennzeichnet, dass** das zumindest eine Teilband (10) aus Duplexstahl gebildet ist.

9. Vorrichtung nach Anspruch 8, **dadurch gekennzeichnet, dass** der Duplexstahl ein zweiphasiges Gefüge mit einem Verhältnis von Ferrit zu Austenit zwischen 0,8 bis 1,2 insbesondere von 1 aufweist.

10. Vorrichtung nach Anspruch 8 oder 9, **dadurch gekennzeichnet, dass** der Duplexstahl zwischen 23 und 26% Chrom und zwischen 5 und 9% Nickel aufweist.

## Claims

1. A device (1) for producing tissue paper, comprising at least one endless belt (2) for supporting and transporting a fiber web (3), wherein the device (1) has at least one pressure roller (4), wherein a gap (5) for pressing the fiber web (3) is formed between the at least one pressure roller (4) and the at least one endless belt (2), **characterized in that** the endless belt (2) is made up of at least one sub-belt (10) made of metal, in particular steel, which is narrower than the endless belt (2), wherein the a least one sub-belt (10) is connected to the endless belt (2) by means of a helically circumferential weld seam (11).

2. The device according to claim 1, **characterized in that** the helical weld seam (11) is the only weld seam of the endless belt (2).

3. The device according to claim 1 or 2, **characterized in that** the weld seam (11) is tilted in a longitudinal direction of the endless belt (2).

4. The device according to claim 3, **characterized in that** the weld seam (11) encloses an angle (α) of 1° to 25°, in particular of 6° to 9°, with a longitudinal central plane (ε) of the endless belt (2) in the longitudinal direction of the endless belt (2).

5. The device according to one of claims 1 to 4, **characterized in that** the endless belt (2) is produced from a single sub-belt (10), wherein the sub-belt (10) comprises a belt body formed of a single piece of sheet metal free of joints.

6. The device according to one of claims 1 to 5, **characterized in that** the sub-belt (10) has a thickness of 0.3 mm to 3.5 mm, in particular of 0.8 mm to 1.2 mm, as well as at least one width between 300 mm and 1,000 mm, wherein the endless belt has a width of between 700 mm and 5,000 mm.

7. The device according to one of claims 1 to 7, **characterized in that** regions of the sub-belt (10) adjoining outer edges (12, 13) of the endless belt (2) are cut off, wherein opposing outer edges (12, 13) of the endless belt (2) run parallel to one another.

8. The device according to claim 1 to 7, **characterized in that** the at least one sub-belt (10) is formed of duplex steel.

9. The device according to claim 8, **characterized in that** the duplex steel has a two-phase structure with a ferrite/austenite ratio of between 0.8 and 1.2, in particular of 1.

10. The device according to claim 8 or 9, **characterized in that** the duplex steel comprises between 23 and 26% or chromium and between 5 and 9% of nickel.

## Revendications

1. Dispositif (1) pour la fabrication de papier de soie, qui comprend au moins une bande sans fin (2) pour le support et le transport d'une bande de fibres (3), dans lequel le dispositif (1) comprend au moins un rouleau de pression (4), dans lequel, entre l'au moins un rouleau de pression (4) et l'au moins une bande sans fin (2), un interstice (5) est formé pour le pressage de la bande de fibres (3), **caractérisé en ce que** la bande sans fin (2) est constituée d'au moins une bande partielle (10) en métal, plus particulièrement en acier, qui est plus étroite que la bande sans fin (2), dans lequel l'au moins une bande partielle (10) est relié avec la bande sans fin (2) au moyen d'un cordon de soudure hélicoïdal (11).

2. Dispositif selon la revendication 1, **caractérisé en ce que** le cordon de soudure hélicoïdal (11) est le seul cordon de soudure de la bande sans fin (2).

3. Dispositif selon la revendication 1 ou 2, **caractérisé en ce que** le cordon de soudure (11) est incliné dans une direction longitudinale de la bande sans fin (2).

4. Dispositif selon la revendication 3, **caractérisé en ce que** le cordon de soudure (11) forme, dans la direction longitudinale de la bande sans fin (2), avec un plan central longitudinal (ε) de la bande sans fin (2), un angle (α) de 1° à 25°, plus particulièrement de 6° à 9°.

5. Dispositif selon l'une des revendications 1 à 4, **caractérisé en ce que** la bande sans fin (2) est constituée d'une seule bande partielle (10), dans lequel la bande partielle (10) comprend un corps de bande constitué d'une seule tôle métallique exempte de points d'assemblage.

6. Dispositif selon l'une des revendications 1 à 5, **caractérisé en ce que** la bande partielle (10) présente une épaisseur de 0,3 mm à 3,5 mm, plus particulièrement de 0,8 mm à 1,2 mm, ainsi qu'au moins une largeur entre 300 mm et 1 000 mm, dans lequel la bande sans fin présente une largeur entre 700 mm et 5 000 mm.

7. Dispositif selon l'une des revendications 1 à 7, **caractérisé en ce que**, au niveau d'arêtes externes (12, 13) de la bande sans fin (2), sont découpées des zones adjacentes de la bande partielle (10), dans lequel des arêtes externes (12, 13), opposées entre elles, de la bande sans fin (2) s'étendent parallèlement entre elles.

8. Dispositif selon l'une des revendications 1 à 7, **caractérisé en ce que** l'au moins une bande partielle (10) est constituée d'acier duplex.

9. Dispositif selon la revendication 8, **caractérisé en ce que** l'acier duplex est un assemblage à deux phases avec un rapport entre ferrite et austénite entre 0,8 et 1,2, plus particulièrement de 1.

10. Dispositif selon la revendication 8 ou 9, **caractérisé en ce que** l'acier duplex contient entre 23 et 26 % de chrome et entre 5 et 9 % de nickel.
